# EUROPEAN PATENT SPECIFICATION

(11) **EP 2 098 931 B1**
(45) Date of publication and mention of the grant of the patent: **25.07.2012**
(21) Application number: 08171116.0
(22) Date of filing: 09.12.2008
(51) Int. Cl.: G05B 19/41, G05B 19/404

(54) **Numerical controller controlling five-axis processing machine**
Numerische Steuerung, die eine fünfachsige Verarbeitungsmaschine steuert
Contrôleur numérique commandant une machine de traitement à cinq axes

(30) Priority: 07.03.2008 JP 2008057550
(43) Date of publication of application: 09.09.2009
(73) Proprietor: FANUC CORPORATION, Oshino-mura Minamitsuru-gun Yamanashi 401-0597 (JP)
(72) Inventor: Otsuki, Toshiaki c/o FANUC LTD, Minamitsuru-gun, Yamanashi 401-0597 (JP); Ide, Soichiro c/o FANUC LTD, Minamitsuru-gun, Yamanashi 401-0597 (JP); Hanaoka, Osamu c/o FANUC LTD, Minamitsuru-gun, Yamanashi 401-0597 (JP); Koga, Daijirou c/o FANUC LTD, Minamitsuru-gun, Yamanashi 401-0597 (JP)
(74) Representative: Ward, James Norman

(56) References cited:
- US-A1- 2004 181 307
- US-A1- 2005 035 734
- BOHEZ E L J: "Compensating for systematic errors in 5-axis NC machining" COMPUTER AIDED DESIGN, ELSEVIER PUBLISHERS BV., BARKING, GB LNKD- DOI:10.1016/S0010-4485(01)00111-7, vol. 34, no. 5, 15 April 2002 (2002-04-15) , pages 391-403, XP004332251 ISSN: 0010-4485
- LIM E M ET AL: "ERROR COMPENSATION FOR SCULPTURED SURFACE PRODUCTIONS BY THE APPLICATION OF CONTROL-SURFACE STRATEGY USING PREDICTED MACHINING ERRORS" TRANSACTIONS OF THE AMERICAN SOCIETY OF MECHANICAL ENGINEERS,SERIES B: JOURNAL OF ENGINEERING FOR INDUSTRY, ASME. NEW YORK, US, vol. 119, no. 3, 1 August 1997 (1997-08-01), pages 402-409, XP000702560 ISSN: 0022-0817

## Description

### BACKGROUND OF THE INVENTION

### 1. Field of the Invention

The present invention relates to a numerical controller and particularly relates to a numerical controller controlling a five-axis processing machine machining a workpiece attached onto a table using three linear axes and two rotational axes.

### 2. Description of the Related Art

In machining by a five-axis processing machine, a workpiece is normally machined as follows. In response to a moving command of a moving path of a tool center point and that of a tool direction (tool posture), the tool direction is interpolated while interpolating the moving path of the tool center point based on relative moving velocities of a tool with respect to a target workpiece. Further, the tool center point is moved on the instructed moving path at the instructed velocity while the tool direction is changing. Machining control based on such commands is referred to as "tool center point control". Program commands used in the tool center point control are created by means of CAM. The CAM that is an abbreviation of "Computer Aided Manufacturing" means creation of manufacturing data using a computer.

An example of such tool center point control is disclosed in Japanese Patent Application Laid-Open No. 2003-195917, which relates to control of a five-axis processing machine, wherein interpolation points of the moving path are corrected while interpolating a moving command of a moving path of a tool center point and a tool direction based on relative moving velocities of a tool with respect to a workpiece, and a servo motor is driven such that the tool center point moves on the instructed moving path at an instructed velocity.

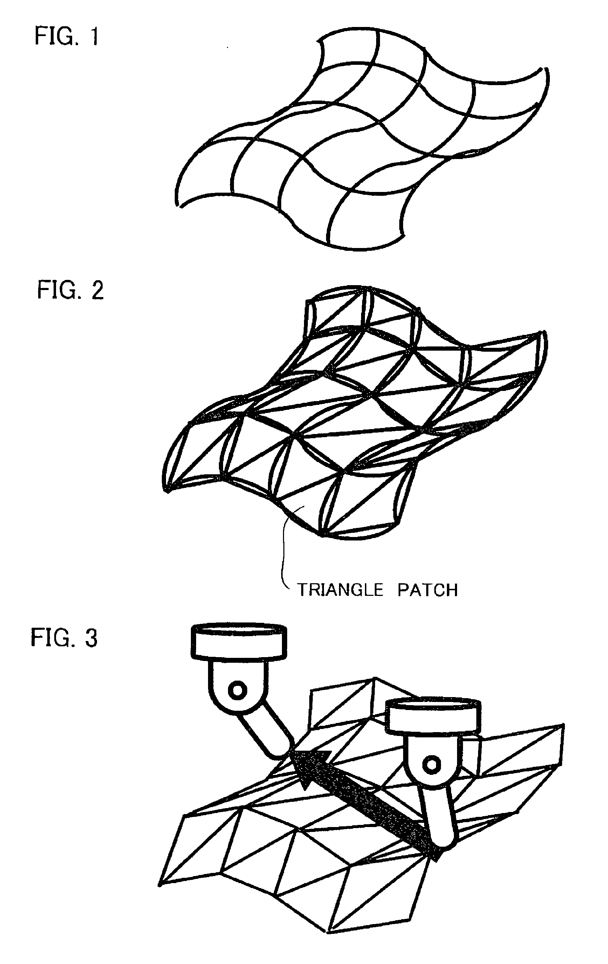

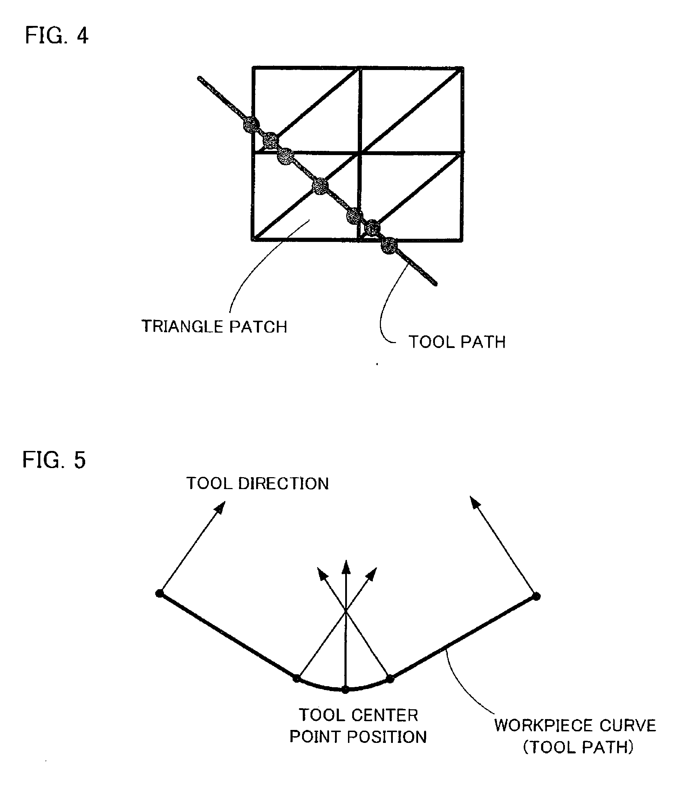

US 2004/181307 A1 discloses a numerically controlled curved-surface machining unit comprises a component converting matrix.angle-addition value forming function of converting CL (cutter location) data into components on a normal coordinate system on the basis of the machine configuration of the simultaneous multiple-axis control NC machine, a component converting function of converting from the workpiece coordinate system to the normal coordinate system, a function of forming second angles of a second rotary axis on the normal coordinate system, a compensating function of forming a continuous angle distribution from a distribution of the second angles, a function of forming first angles of a first rotary axis on a coordinate system rotated by the second angles at the second rotary axis, a compensating function of forming a continuous angle distribution from a distribution of the first angles,; a machine coordinate transformation matrix forming function of obtaining a matrix for converting the tool control point vectors on the workpiece coordinate system into a machine coordinate system by using the first angles and the second angles, and a machine coordinate converting function of converting the tool control point vectors into the machine coordinate system by using the machine coordinate transforming matrix. A general method of creating program commands by the CAM will now be described. A processing curve as shown in Fig. 1 is divided into sections called "triangle patches" as shown in Fig. 2. A tool path is calculated on the triangle patches as shown in Fig. 3. As shown in Fig. 4, a program command is created so that blocks correspond to intersections between a tool path and sides of the respective triangle patches. The triangle patch is created as to be within the tolerance allowed in response to the processing curve.

As shown in Fig. 4, since a path of the tool center point is on the triangle patches, tool center point intervals are not uniform. Furthermore, a tool direction is set in a direction perpendicular to a surface of each of the created triangle patches. On each boundary between the two adjacent triangle patches, a tool direction is generally set to be an average value of the two tool directions perpendicular to the respective two triangle patches. Due to this, as shown in Fig. 5, if a variation in the tool direction is viewed in a cross section along a tool path, it is found that small forward and backward movements are generated in the tool direction at short intervals on a gentle concave bottom of the processing curve.

If a program command in which such small forward and backward movements are generated in the tool direction is delivered to a machine tool, the machine tool repeatedly decelerates and accelerates according to a change in velocities of the rotational axes. As a result, a machined shape disadvantageously becomes coarse and long machining time is disadvantageously required. These problems frequently occur depending on the machined shape or a type of the CAM.

### SUMMARY OF THE INVENTION

It is, therefore, an object of the present invention to provide a numerical controller for controlling a five-axis processing machine capable of making a machined shape smooth and shortening machining time by thinning-out a program command to a block having small changes in a tool center point position and a tool posture and by eliminating small movements of a tool.

A numerical controller for controlling a five-axis processing machine according to one aspect of the present invention includes three linear axes and two rotational axes for machining a workpiece attached onto a table. This numerical controller includes: command read means for reading a command of a moving path of each of the linear axes, a command of relative moving velocity of a tool with respect to the workpiece, and a command of a tool direction relative to the table; command thinning-out means for executing a thinning-out processing on a command of a moving path of any of the linear axes and a command of a tool direction; interpolation means for calculating positions of the respective axes for every interpolation cycle so that a tool center point moves on the instructed moving path at the instructed relative moving velocity based on the command of the moving path and the command of the tool direction remaining without being thinned out by the command thinning-out means as well as the command of the relative moving velocities; and driving means for driving motors for the respective axes so as to move the motors to the positions of the corresponding axes calculated by the interpolation means, the command thinning-out means thins out the command of a moving path of any of the linear axes and the command of a tool direction if the change amount of the tool direction and the change amount of any of the linear axes in the command of the moving path are smaller than preset values, respectively.

The command of a tool direction may be issued in the form of angles of the two rotational axes or a tool direction vector.

The command read means may read, if a thinning-out mode ON command is issued, a preset number of blocks in advance as thinning-out target program command until a thinning-out mode OFF command is issued, and the command thinning-out means may execute the thinning-out processing on the command of a moving path of a linear axis and the command of a tool direction in the thinning-out target program command.

The thinning-out mode ON command may be designated by a G code or an M code, and the thinning-out mode OFF command may be designated by a G code or an M code different from the G code and the M code used for designating the thinning-out mode ON command.

The numerical controller according to the present invention is configured as stated above. Therefore, by thinning-out a block having small changes in a tool center point position and a tool posture, small movements of a tool can be eliminated, a machined shape of a workpiece can be made smooth, and machining time can be shortened.

### BRIEF DESCRIPTION OF THE DRAWINGS

The above and other objects and features of the present invention will become apparent from the following description of an embodiment with reference to the accompanying drawings, wherein:
Fig. 1 shows a processing curve;
Fig. 2 is an explanatory view of dividing the processing curve shown in Fig. 1 into sections called triangle patches;
Fig. 3 is an explanatory view of calculating a tool path on the triangle patches shown in Fig. 2;
Fig. 4 is an explanatory view of creating a program command in which blocks correspond to intersections (indicated by black circles) between a tool path and sides of the respective triangle patches;
Fig. 5 is a cross-sectional view along a tool path;
Fig. 6 is a schematic functional block diagram of a numerical controller for controlling a five-axis processing machine according to an embodiment of the present invention;
Fig. 7A is a schematic diagram representing a moving path of a tool center point position before thinning-out five-axis machining commands by the numerical controller shown in Fig. 6;
Fig. 7B is a schematic diagram explaining a state in which the numerical controller shown in Fig. 6 executes a thinning-out processing on the five-axis machining commands having the moving path shown in Fig. 7A;
Fig. 8 is an explanatory diagram of changing a machining program before and after the thinning-out processing shown in Figs. 7A and 7B;
Fig. 9 is a schematic diagram showing the relationship between a tool vector and a coordinate system during five-axis machining;
Fig. 10 shows an example of designating the tool direction by two rotational axes;
Fig. 11 shows an example of designating the tool direction by a tool vector (i, j, k);
Fig. 12 is a flowchart showing an example of an algorithm of the thinning-out processing executed by the numerical controller for controlling the five-axis processing machine according to the embodiment of the present invention;
Fig. 13 is a schematic diagram showing an example of an NC program in which a thinning-mode ON command is M33 and a thinning-mode OFF command is M34; and
Fig. 14 is a block diagram of principal elements of the numerical controller (CNC) for controlling a five-axis processing machine according to the embodiment of the present invention.

### DETAILED DESCRIPTION OF THE PREFERRED EMBODIMENTS

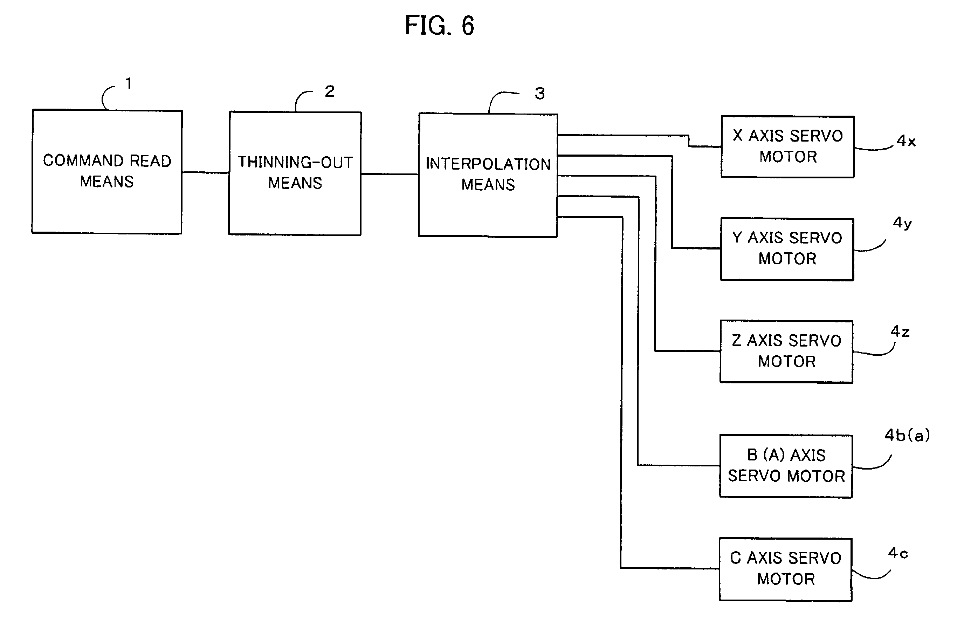

Fig. 6 is a schematic functional block diagram of a numerical controller for controlling a five-axis processing machine according to an embodiment of the present invention.

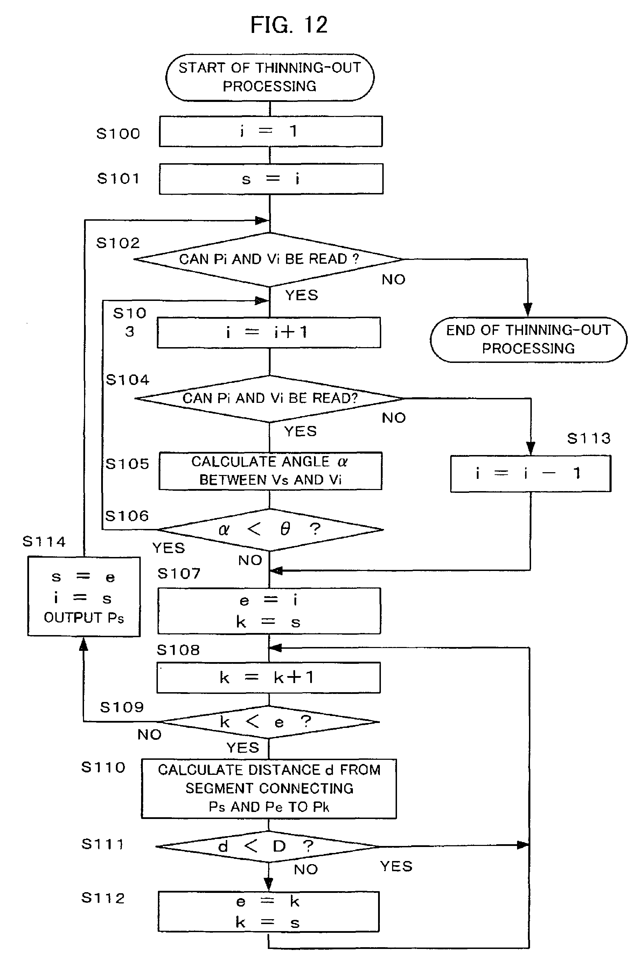

Command reading means 1 analyzes blocks of an NC program that is a machining program. Thinning-out means 2 executes a predetermined thinning-out processing (a processing indicated by a flowchart of an algorithm shown in Fig. 12). Interpolation means 3 executes an interpolation processing on machine coordinate positions of linear axes and rotational positions of rotational axes that have been subjected to the predetermined thinning-out processing to thereby calculate the positions of respective axes in every interpolation cycle so that the tool center point moves on a moving path at instructed relative moving velocities. Servo motors 4x, 4y, 4z, 4b(a) and 4c of respective axes are controlled based on the data which has been subjected to interpolation processing.

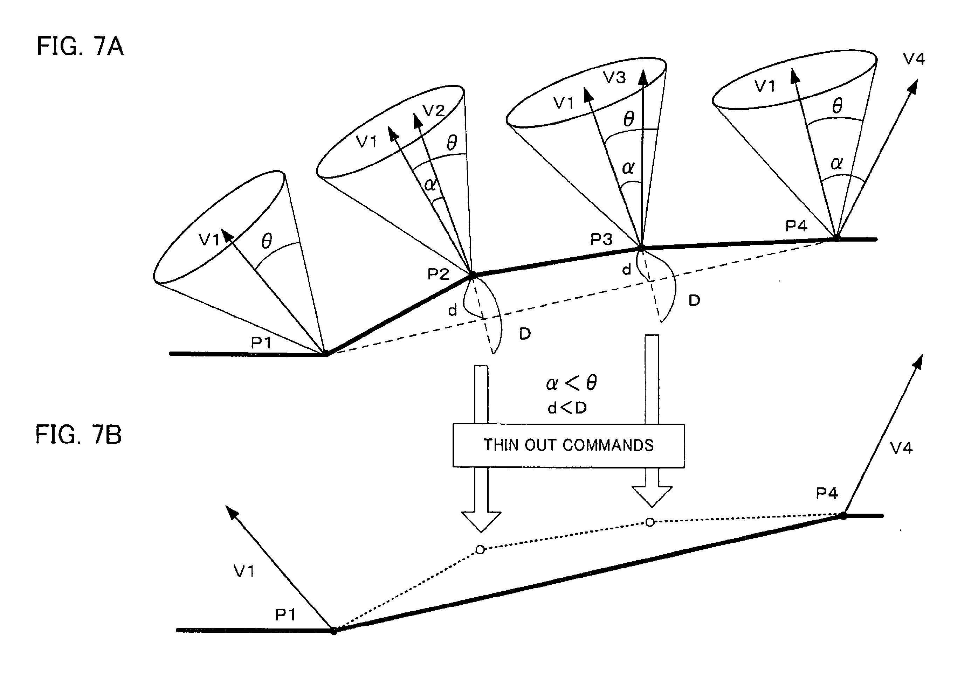

Figs. 7A and 7B are explanatory views of the thinning-out processing executed by the numerical controller shown in Fig. 6. The numerical controller executes this thinning-out processing when a five-axis machining command satisfies both of the following conditions (1) and (2).
(1) An angle α (a change amount of a tool direction) of a tool direction at a certain tool center point position with respect to a tool direction V1 at a machining start position P1 is within an angle tolerance θ.
(2) A distance d (a deviation) of a certain tool center point position from a line segment connecting the machining start position P1 and a tool center point position P4 that does not satisfy the condition (1) is within a distance tolerance D.

Fig. 7A shows a moving path of tool center point positions if the thinning-out processing is not executed according to the present invention. The tool direction is V1 at the tool center point position P1, V2 at a tool center point position P2, V3 at a tool center point position P3, and V4 at a tool center point position P4.

The change amount α of the tool direction, which is the difference between the tool direction at each tool center point position and the tool direction V1 at the tool center point position P1, is within the preset angle tolerance θ at the tool center point positions P2 and P3 (α < θ). The change amount α exceeds the angle tolerance θ at the tool center point position P4 (α > θ). Furthermore, a distance (deviation) d from a line (indicated by a dotted line in Fig. 7A) which connects the tool center point position P4 at which the change amount α exceeds the angle tolerance θ and the tool center point position P1, to the tool center point position P2 or P3, which is a change amount of a linear axis, is within the range of preset distance tolerance D (d < D).

Fig. 7B shows a moving path when the tool center point positions P2 and P3 are thinned out in a range from the tool center point position P1 to the tool center point position P4. A tool center point moves on a line connecting the tool center point position P1 and the tool center point position P4 as shown in Fig. 7B. As already described with reference to Fig. 7A, the change amount α of the tool direction does not exceed the angle tolerance D and the change amount d of the linear axis does not exceed the distance tolerance D at the tool center point position P2 or P3. Due to this, the tool center point position P2 (the tool direction V2) and the tool center point position P3 (the tool direction V3) are thinned out. By executing this thinning-out processing, the tool center point moves on a segment of the line connecting the tool center point position P1 and the tool center point position P4 as shown in Fig. 7B. Further, the tool direction is gradually changed from the tool direction V1 to the tool direction V4 during movement of the tool center point from the tool center point position P1 to the tool center point position P4, during which forward and backward movements of the tool direction as shown in Fig. 5 do not occur.

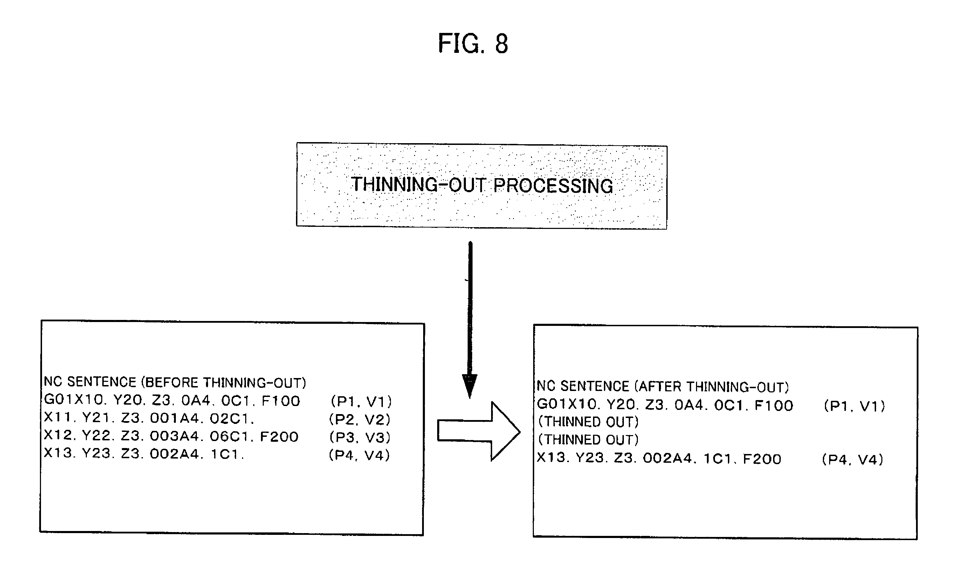

The thinning-out processing according to the present invention shown in Figs. 7A and 7B will be described while referring to an example of a machining program shown in Fig. 8.

If an NC sentence is subjected to the thinning-out processing according to the present invention, for example, an NC sentence shown on the left side of Fig. 8 is thinned out to an NC sentence shown on the right side of Fig. 8. In the example of the machining program shown in Fig. 8, blocks (P2, V2) and (P3, V3) concerning tool center point positions and tool directions are thinned out. Although the block (P3, V3) having a velocity command F200 is thinned out, the velocity command F200 itself is taken over to a next block (P4, V4) remainded without thinning-out.

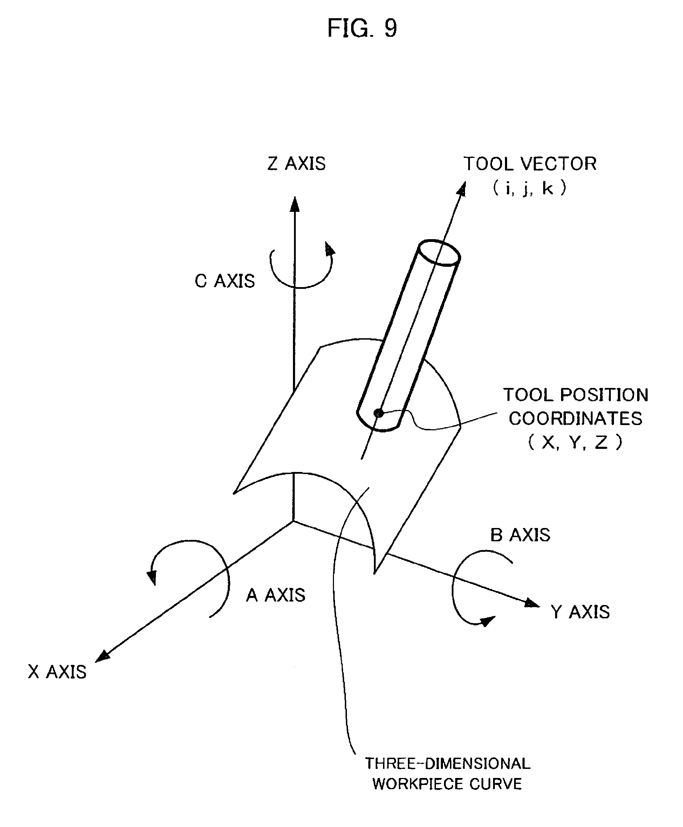

Fig. 9 is a schematic diagram showing the relationship between a tool vector and a coordinate system during five-axis machining. To command a tool on a workpiece having a three-dimensional curve with the designed direction, it suffices to designate tool position coordinates (X, Y, Z) and two rotational axes or a tool vector (i, j, k) indicating a tool inclination direction (tool direction), as shown in Fig. 9.

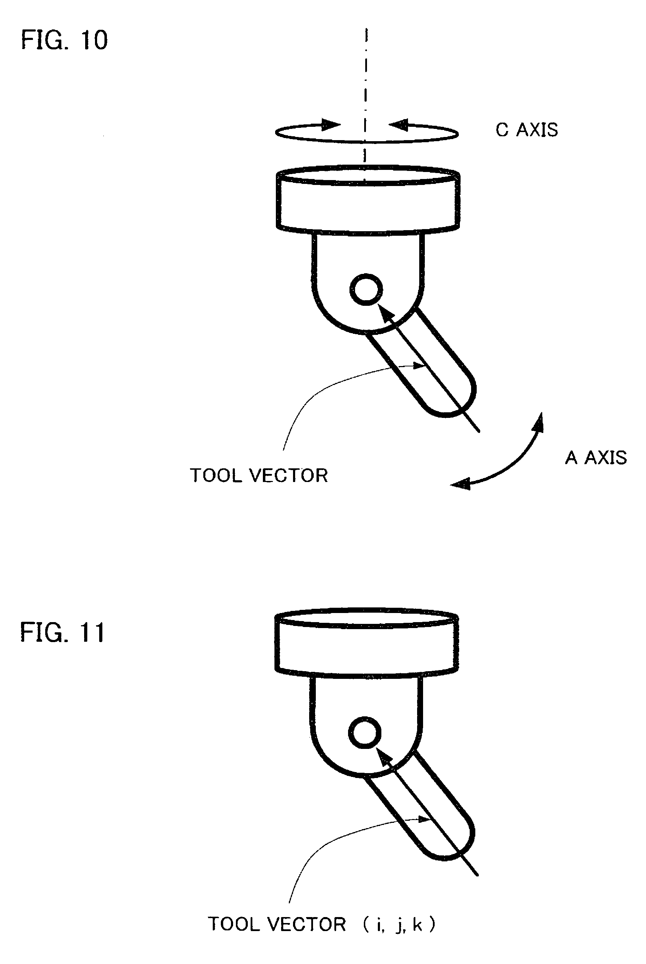

Fig. 10 shows an example in which a tool direction is designated using two rotational axes. In Fig. 10, the tool direction is obtained by designating A and C axes that are the rotational axes. For example, if the A axis is at 30 degrees and the C axis is at 45 degrees, the NC command sentence will be "G01X10. Y20. 230. A30. C45.", in which linear axes and rotational axes are designated.

Fig. 11 shows an example in which a tool direction is designated using tool vector (i, j, k). In Fig. 11, the tool direction is obtained by designating the tool vector (i, j, k). For example, if the tool vector (i, j, k) is (0.1, 0.6, 0.3), the NC command sentence will be "G01X10. Y20. Z30. I0. 1J0. 6K0.3.", in which linear axes and a tool direction vector are designated.

Fig. 12 is an example of a flowchart showing an algorithm of the thinning-out processing executed by the numerical controller for controlling the five-axis processing machine according to the embodiment of the present invention. The algorithm will be described according to the respective steps of the flowchart.

An index i representing the number of a tool center point position is set to 1 (step S100). An index s representing the number of a tool center point position serving as a start point of the thinning-out processing is set to the value of the index i (step S101). It is determined whether or not a tool center point position Pi and a tool direction Vi can be read (step S102). If the tool center point position Pi and the tool direction Vi can not be read, the thinning-out processing is finished. If the tool center point position Pi and the tool direction Vi is determined to be able to read, the processing proceeds to step S103.

In step S103, 1 is added to the index i. It is determined whether or not the tool center point position Pi and the tool direction Vi can be read (step S104). If the tool center point position Pi and the tool direction Vi cannot be read, 1 is subtracted from the index i and the processing proceeds to step S107. If the tool center point position Pi and the tool direction Vi can be read, on the other hand, the processing proceeds to step S105. The change amount α in the tool direction which is an angle between a tool direction Vs at a tool center point position Ps and the tool direction Vi at the tool center point position Pi is calculated (step S105) and the processing proceeds to step S106.

It is determined whether or not the change amount α of the tool direction calculated in step S105 is smaller than the angle tolerance θ (step S106). If α < θ, the processing returns to step S103. If α ≥ θ, the processing proceeds to step S107.

The value of the index i is input to an index e representing the number of a tool center point position that is an end point of the thinning-out processing and s is input to an index k representing the number of a current tool center point position (step S107). 1 is added to the value of the index k (step S108). It is determined whether or not the index k is smaller than e (step S109). If k ≥ e, then the value of e is input to the index s and the tool center point position Ps is output (step S114), and the processing returns to step S102. If k < e, the processing proceeds to step S110.

The distance d from a segment connecting the tool point center position Ps that is the start point and a tool center point position Pe that is the end point, to the current tool point center position Pk is calculated (step S110). It is determined whether or not the distance d is smaller than the distance tolerance D (step S111). If d < D, the processing returns to step S108. If d ≥ D, then the processing proceeds to step S112, k is input to the index e representing the tool center point position that is the end point and s is input to the index k representing the number of the current tool center point position, and the processing returns to step S108.

To help understand the flowchart of the algorithm shown in Fig. 12, an instance of executing a thinning-out processing on the tool center point position P1 (tool direction V1) to the tool center point position P4 (tool direction V4) in Fig. 7 for explaining that the numerical controller executes the thinning-out processing on the five-axis processing commands according to the algorithm shown in Fig. 12 will now be described.

In Fig. 7B, the tool center point start position P1 is set as the start point of the thinning-out processing. Therefore, 1 is set to the index i, the value of the index i (= 1) is set to the index s of the number of the tool center point position that is the start point, and (P1, V1) is read (steps S100 to S102). Further, 1 is added to the index i, the value of the index i is set to 2, (P2, V2) is read, and the change amount α of the tool direction that is the angle between the tool directions V1 and V2 is calculated (steps S103 to S105).

Since the angle α between the tool directions V1 and V2 calculated in step S105 is within the angle tolerance θ (α < θ), the processing returns from step S106 to step S103. 1 is further added to the value of the index i (becomes i = 3), (P3, V3) is read, and the change amount α of the tool direction (deviation of the tool direction) that is the angle between the tool directions V1 and V3 is calculated. Since the calculated angle α between the tool directions V1 and V3 is within the angle tolerance θ (α < θ), the processing returns again from step S106 to step S103. 1 is further added to the value of the index i (i = 4) and (P4, V4) is read at step S104.

Since the angle α between the tool directions V1 and V4 is not within the angle tolerance θ (α > θ), the processing goes from step S106 to step S107. The value of the index i (= 4) is set to the index e and the value of the index s (= 1) is set to the index k. Further, 1 is added to the value of the index k (the index k becomes 2) (step S108).

Since it is determined that k (= 2) < e (= 4) in step S109, the processing proceeds to step S110. The distance d from the segment connecting the tool center point position Ps = P1 and the tool center point position Pe = P4 to the tool center point position Pk = P2 is calculated (step S110). Since the calculated distance d is smaller than the distance tolerance D (d < D), the processing returns from step S111 to step S108. 1 is added to the value (= 2) of the index k (k = 3), and the processing from step S109 to step S111 is carried out again. Since the calculated distance d from the segment connecting the tool center point position P1 and the tool center point position P4 to the tool center point position P3 is also within the distance tolerance D (d < D), the processing returns again to step S108. 1 is added to the value of the index k (the index k becomes 4).

As a result of the above-stated processing, k = 4 and e = 4, that is, the condition k < e is not satisfied. Therefore, the processing returns from step S109 to step S114, 4 is set to the index s, 4 is set to the index i, the tool center point position Ps = P4 is output, the processing returns to step S102, and the processing goes to a next thinning-out processing.

As a result of this processing, the blocks (P2, V2) and (P3, V3) are not output (thinned out) and the block (P4, V4) is output after the block (P1, V1) as shown in Fig. 7B. The NC sentence is thinned out as shown in, for example, Fig. 8.

In the example of the five-axis machining commands shown in Fig. 7A as described above, the condition d < D is satisfied at the tool center point positions P2 and P3 and determination results for P2 and P3 in step S111 are "YES". As another example, an instance of d > D at the tool center point position P3 will be considered below.

As assumed d > D at the tool center point position P3 (k = 3), s = 1 (step S101) and e = 4 (step S107) just before the determination result is NO in step S111. Therefore, in the subsequent step S112, the number k (= 3) of the current tool center point position is input to the index e, the value (= 1) of the index s is input to the index k (step S112), and the processing returns to step S108. In step S108, 1 is added to the value (= 1) of the index k. Since the value (= 2) of the index k is smaller than the value (= 3) of the index e and k < e is satisfied, the processing goes from step S109 to step S110. In step S110, the distance d from the segment connecting the Ps(= P1) and the Pe(= P3) to the Pk(= P2) is calculated. As a result, if d < D, the processing goes from step S111 to step S108 and 1 is added to the value (= 2) of the index k. In this case, the value (= 3) of the index k is equal to the value (= 3) of the index e, so that k < e is not already satisfied. As a result, the determination result is "NO" in step S109 and the processing goes from step S109 to step S114 with e = 3. In step S114, the value (= 3) of the index e is set to the index s, the value (= 3) of the index s is set to the index i, and the tool center point position Ps (= P3) is output. And, the processing returns to step S102 with i = 3 and s = 3.

As can be understood, as shown in Fig. 7, in tool center point position P1, P2, P3, P4, if the condition α < θ is satisfied at the tool center point positions P2 and P3 with reference to the tool center point position P1 but the condition α < θ is not satisfied at the tool center point position P4, the following processings are performed.
1) If distances d from the line connecting the tool center point position P1 (that is the start point) and the tool center point position P4 (where the condition α < θ is not satisfied) to the tool center point position P2 and the tool center point position P3 (where the condition α < θ is satisfied) are smaller than D (d < D), respectively, then the tool center point positions P2 and P3 are thinned out. A start point of the next thinning-out processing is P4, accordingly.
2) If the distance d from the line connecting the tool center point position P1 (that is the start point) and the tool center point position P4 to the tool center point position P2 (where the condition α < θ is satisfied) is smaller than the distance tolerance D (d < D) but the distance d from the line to the tool center point position P3 is larger than the distance tolerance D (d > D), then the tool center point position P2 where the condition (d < D) is satisfied is thinned out but the tool center point position P3 where the condition (d < D) is not satisfied is not thinned out. A start point of the next thinning-out processing is set to the tool center point position P3, accordingly.

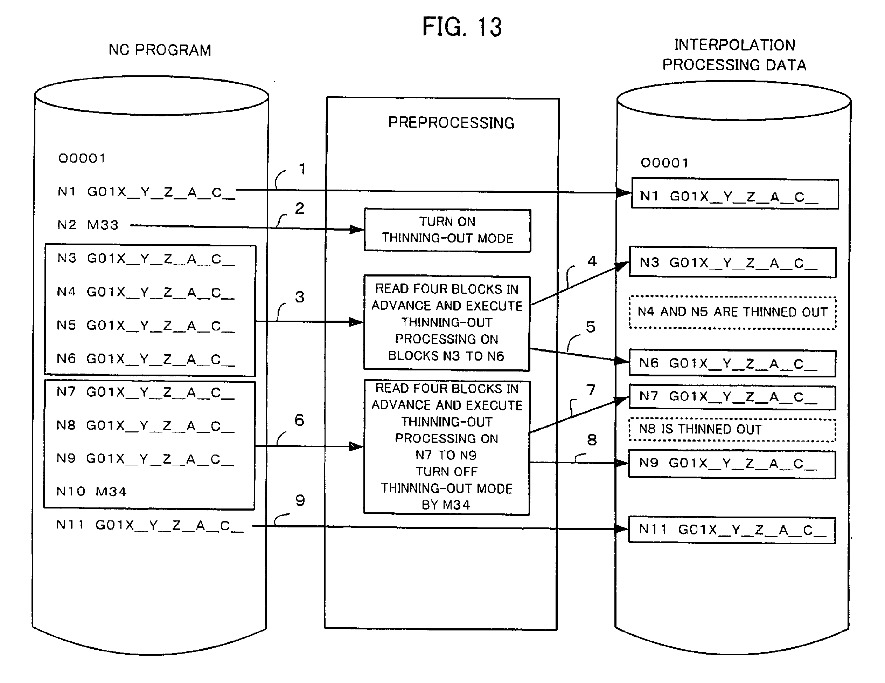

Fig. 13 shows an example of an NC program in which a thinning-out mode ON command is M33 and a thinning-out mode OFF command is M34.

In the example of Fig. 13, an NC program "00001" is a program having sequence numbers N1 to N11. "G01" is a G code representing linear interpolation. "X", "Y", "Z", "A", and "C" are dimension words (coordinate words) representing the respective axes to be controlled. "M33" in a block of the sequence number N2 is a thinning-out mode ON command and "M34" in a block sequence number N10 is a thinning-out mode OFF command. "M33" and "M34" are M codes for instructing a switch to be turned on and off, respectively. Alternatively, predetermined G codes may be used as thinning-out mode ON command and thinning-out OFF command, in place of the M codes, respectively, and the thinning-out processing according to the present invention may be performed. For example, the thinning-out mode processing ON "G43. 4P1" and the thinning-out processing OFF "G43. 4P0" may be issued.

Processings (1) to (9) shown in Fig. 13 are performed before interpolation processing. In the block of sequence number N2, a thinning-out mode is turned on by the code M33. Therefore, as a preprocessing, four blocks N3 to N6 are read in advance and a thinning-out processing is executed on the four blocks N3 to N6. Further, next four blocks N7 to N9 are read in advance and a thinning-out processing is executed on these four blocks N7 to N9. Since the block of sequence number N10 has M34, the thinning-out mode is turned off.

In the preprocessing, as a result of the thinning-out processing on the blocks N3 to N6, the blocks N4 and N5 are thinned out, and as a result of the thinning-out processing on the blocks N7 to N9, the block N8 is thinned out.

As a result of the aforementioned preprocessing, interpolation processing data is the blocks N1, N3, N6, N7, N9, and N11. That is, the interpolation processing data shown in Fig. 13 indicate that the blocks N4, N5, and N8 are thinned out from the NC program.

The thinning-out processing ON and OFF commands by the G codes and those by the M codes will be additionally described.

The G codes are interfaces prepared by the numerical controller for end users. The M codes are functions generally added by a machine manufacturer for end users. If the numerical controller is provided with an interface for the thinning-out processing ON and OFF commands for signals from a PMC (Programmable Machine Controller), the machine manufacturer transmits the thinning-out processing ON and OFF commands to the numerical controller via the signals from the PMC while using the M code commands as triggers.

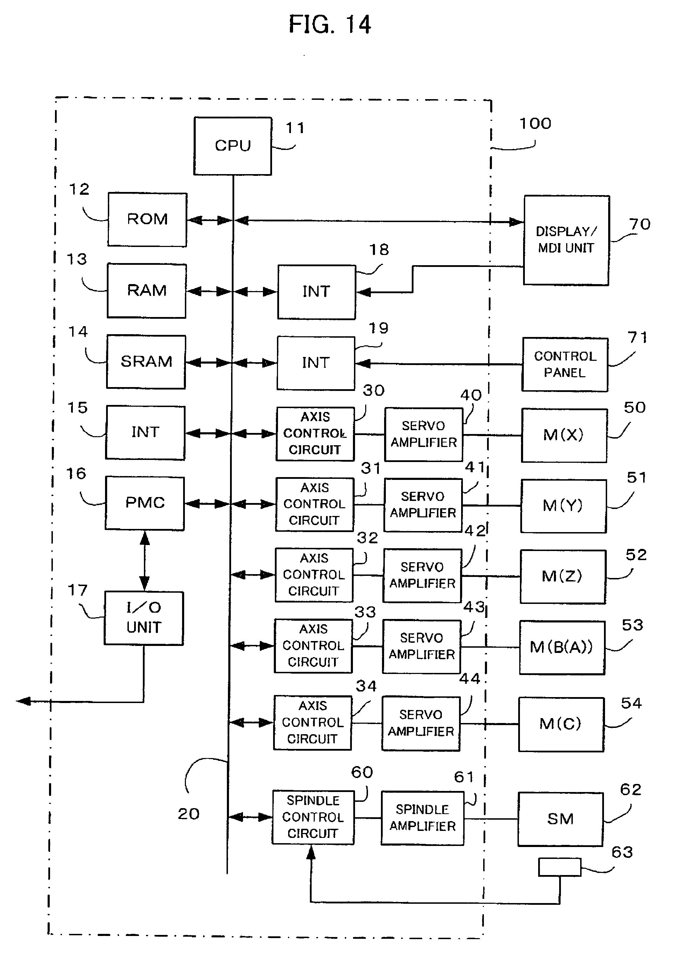

Fig. 14 is a block diagram of principal elements of a numerical controller (CNC) 100 controlling the five-axis processing machine according to the embodiment of the present invention.

A CPU 11 is a processor that controls entirety of the numerical controller 100. This CPU 11 reads a system program stored in a ROM 12 via a bus 20 and controls the entirety of the numerical controller 100 according to the system program. Temporary calculation and display data and various data input by an operator via a display/MDI unit 70 are stored in a RAM 13.

An SRAM memory 14 is backed up by a battery, not shown, and functions as a nonvolatile memory a storage state of which is held even if the numerical controller 100 is turned off. A machining program read via an interface 15, a machining program input via the display/MDI unit 70 and the like are stored in the SRAM memory 14. Further, various system programs for carrying out an edit mode processing and an automatic operation processing necessary to create and edit the machining program are written to the ROM 12 in advance.

The machining program including a command point sequence data and a vector sequence data created by means of a CAD/CAM device or a copy machine and the like is input to the CNC 100 via the interface 15 and stored in the SRAM memory 14. A program for performing the thinning-out processing according to the present invention is also stored in the SRAM memory 14.

The machining program edited in the numerical controller 100 can be stored in an external storage device via the interface 15. A PMC (programmable machine controller) 16 outputs a signal via I/O unit 17 to an auxiliary device of a machine tool (for example, an actuator such as a robot hand for tool replacement) according to a sequence program included in the numerical controller 100 and controls the signal. Further, the PMC 16 receives a signal from one of various switches on a control panel arranged in a main body of the machine tool, performs a necessary signal processing on the received signal, and transmits the processed signal to the CPU 11.

The display/MDI unit 70 is a manual data input device including a display, a keyboard and the like. The interface 15 receives a command or data from the keyboard of the display/MDI unit 70 and transmits the received command or data to the CPU 11. An interface 19 is connected to a control panel 71 including a manual pulse generator and the like.

Axis control circuits 30 to 34 for respective axes receive moving command amounts of the axes from the CPU 11 and output commands for the axes to corresponding servo amplifiers 40 to 44, respectively. The servo amplifiers 40 to 44 receive the commands and drive servo motors 50 to 54 corresponding to the axes, respectively. The servo motors 50 to 54 corresponding to the axes include therein position/velocity detectors, and feed back position/velocity feedback signals from the corresponding position/velocity detectors to the axis control circuits 30 to 34, thereby executing position/velocity feedback controls, respectively.

The servo motors 50 to 54 drive X, Y, Z, B (A), and C axes of the five-axis processing machine, respectively. A spindle control circuit 60 receives a spindle rotation command and outputs a spindle velocity signal to a spindle amplifier 61. The spindle amplifier 61 receives the spindle velocity signal and rotates a spindle motor 62 at an instructed rotational velocity. An encoder 63 feeds back a feedback pulse to a spindle control circuit 60 synchronously with rotation of the spindle motor 62, thereby executing a velocity control. The numerical controller 100 controls and drives the five-axis processing machine.

## Claims

1. A numerical controller for controlling a five-axis processing machine including three linear axes and two rotational axes for machining a workpiece attached onto a table, comprising:
command read means for reading a command of a moving path of each of said linear axes, a command of relative moving velocity of a tool with respect to the workpiece, and a command of a tool direction relative to said table;
command thinning-out means for executing a thinning-out processing on a command of a moving path of any of the linear axes and a command of a tool direction;
interpolation means for calculating positions of the respective axes for every interpolation cycle so that a tool center point moves on the instructed moving path at the instructed relative moving velocity based on the command of the moving path and the command of the tool direction remaining without being thinned out by said command thinning-out means as well as the command of said relative moving velocities; and
driving means for driving motors for the respective axes so as to move the motors to the positions of the corresponding axes calculated by the interpolation means;
wherein said command thinning-out means thins out the command of a moving path of any of the linear axes and the command of a tool direction if the change amount of the tool direction and the change amount of any of the linear axes in the command of the moving path are smaller than preset values, respectively.

2. The numerical controller for controlling a five-axis processing machine according to claim 1,
wherein the command of a tool direction is issued in the form of angles of the two rotational axes or a tool direction vector.

3. The numerical controller for controlling a five-axis processing machine according to claim 1,
wherein, if a thinning-out mode ON command is issued, said command read means reads a preset number of blocks in advance as thinning-out target program command until a thinning-out mode OFF command is issued, and
said command thinning-out means executes the thinning-out processing on the command of a moving path of a linear axis and the command of a tool direction in said thinning-out target program command.

4. The numerical controller for controlling a five-axis processing machine according to claim 3,
wherein said thinning-out mode ON command is designated by a G code or an M code, and said thinning-out mode OFF command is designated by a G code or an M code different from the G code and the M code used for designating said thinning-out mode ON command.

## Patentansprüche

1. Numerische Steuerung zum Steuern einer fünfachsigen Bearbeitungsmaschine mit drei linearen Achsen und zwei Rotationsachsen zum Bearbeiten eines an einem Tisch befestigten Werkstücks, umfassend
Befehlslesemittel zum Lesen eines Befehls für einen Bewegungspfad von jeder der linearen Achsen, eines Befehls für relative Bewegungsgeschwindigkeit eines Werkzeugs gegenüber dem Werkstück und eines Befehls für eine Werkzeugrichtung gegenüber dem Tisch;
Befehlsausdünnungsmittel zum Ausführen einer Ausdünnungsbearbeitung an einem Befehl eines Bewegungspfads von irgendeiner der linearen Achsen und einem Befehl für eine Werkzeugrichtung;
Interpolationsmittel zum Berechnen von Positionen der jeweiligen Achsen für jeden Interpolationszyklus, so dass ein Werkzeugmittelpunkt sich auf dem angewiesenen Bewegungspfad mit der angewiesenen relativen Bewegungsgeschwindigkeit bewegt, auf der Basis des Befehls für den Bewegungspfad und des verbleibenden Befehls für die Werkzeugrichtung, ohne dass er vom Befehlsausdünnungsmittel ausgedünnt wird, sowie des Befehls für die relativen Bewegungsgeschwindigkeiten; und
Antreibmittel für den Antrieb von Motoren der jeweiligen Achsen, so dass die Motoren in die vom Interpolationsmittel berechneten Positionen der entsprechenden Achsen bewegt werden;
wobei das Befehlsausdünnungsmittel den Befehl eines Bewegungspfads von irgendeiner der linearen Achsen und den Befehl einer Werkzeugrichtung ausdünnt, wenn die Veränderungsmenge der Werkzeugrichtung und die Veränderungsmenge von irgendeiner der linearen Achsen im Befehl des Bewegungspfads jeweils kleiner sind als vorbestimmte Werte.

2. Numerische Steuerung zum Steuern einer fünfachsigen Bearbeitungsmaschine gemäß Anspruch 1,
wobei der Befehl einer Werkzeugrichtung in der Form von Winkeln der beiden Rotationsachsen oder einem Werkzeugrichtungsvektor ausgegeben wird.

3. Numerische Steuerung zum Steuern einer fünfachsigen Bearbeitungsmaschine gemäß Anspruch 1,
wobei, wird ein Ausdünnungsmodus-Einschaltbefehl ausgegeben, das Befehlslesemittel eine vorbestimmte Anzahl Blöcke im Voraus als Ausdünnungszielprogramm liest, bis ein Ausdünnungsmodus-Abschaltbefehl ausgegeben wird, und
das Befehlsausdünnungsmittel die Ausdünnungsbearbeitung ausführt auf den Befehl eines Bewegungspfads einer linearen Achse und den Befehl einer Werkzeugrichtung im Ausdünnungszielprogrammbefehl.

4. Numerische Steuerung zum Steuern einer fünfachsigen Bearbeitungsmaschine gemäß Anspruch 3,
wobei der Ausdünnungsmodus-Einschaltbefehl durch einen G-Code oder einen M-Code bestimmt wird, und der Ausdünnungsmodus-Abschaltbefehl durch einen G-Code oder einen M-Code bestimmt wird, der sich unterscheidet vom G-Code oder dem M-Code, der für die Bestimmung des Ausdünnungsmodus-Einschaltbefehls benutzt wird.

## Revendications

1. Un système de commande numérique destiné à commander une machine de traitement à cinq axes comprenant trois axes linéaires et deux axes rotatifs destiné à usiner une pièce fixée à une table, comprenant :
un moyen de lecture de commande destiné à lire une commande d'un trajet de déplacement de chacun desdits axes linéaires, une commande de vélocité de déplacement relatif d'un outil par rapport à la pièce et une commande d'une orientation d'outil par rapport à ladite table ;
un moyen de réduction de commande destiné à exécuter un traitement de réduction sur une commande d'un trajet de déplacement de l'un quelconque des axes linéaires et une commande d'une orientation d'outil ;
un moyen d'interpolation destiné à calculer des positions des axes respectifs pour tous les cycles d'interpolation de sorte qu'un point central d'outil se déplace sur le trajet de déplacement ordonné à la vélocité de déplacement relatif ordonnée en fonction de la commande du trajet de déplacement et la commande de l'orientation d'outil demeurant sans réduction par ledit moyen de réduction de commande ainsi que la commande desdites vélocités de déplacement relatif ; et
un moyen d'entraînement destiné à entraîner des moteurs pour les axes respectifs de façon à déplacer les moteurs vers les positions des axes correspondants calculées par le moyen d'interpolation ;
où ledit moyen de réduction de commande réduit la commande d'un trajet de déplacement de l'un quelconque des axes linéaires et la commande d'une orientation d'outil si la quantité de changement de l'orientation d'outil et la quantité de changement de l'un quelconque des axes linéaires dans la commande du trajet de déplacement sont plus petites que des valeurs prédéfinies, respectivement.

2. Le système de commande numérique destiné à commander une machine de traitement à cinq axes selon la revendication 1,
où la commande d'une orientation d'outil est émise sous la forme d'angles des deux axes rotatifs ou d'un vecteur d'orientation d'outil.

3. Le système de commande numérique destiné à commander une machine de traitement à cinq axes selon la revendication 1,
où, si une commande ON de mode réduction est émise, ledit moyen de lecture de commande lit un nombre prédéfini de blocs à l'avance en tant que commande de programme cible de réduction jusqu'à ce qu'une commande OFF de mode réduction soit émise, et
ledit moyen de réduction de commande exécute le traitement de réduction sur la commande d'un trajet de déplacement d'un axe linéaire et la commande d'une orientation d'outil dans ladite commande de programme cible de réduction.

4. Le système de commande numérique destiné à commander une machine de traitement à cinq axes selon la Revendication 3,
où ladite commande ON de mode réduction est désignée par un code G ou un code M et ladite commande OFF de mode réduction est désignée par un code G ou un code M différent du code G et du code M utilisés pour désigner ladite commande ON de mode réduction.
